# EUROPÄISCHE PATENTANMELDUNG

(11) **EP 3 435 140 A1**
(43) Veröffentlichungstag der Anmeldung: **30.01.2019**
(21) Anmeldenummer: 18184672.6
(22) Anmeldetag: 20.07.2018
(51) Int. Cl.: G02B 27/01, E02F 9/26

(54) **ARBEITSMASCHINE MIT ANZEIGEEINRICHTUNG**

(30) Priorität: 25.07.2017 DE 102017116822
(71) Anmelder: Liebherr-Hydraulikbagger GmbH, 88457 Kirchdorf (DE)
(72) Erfinder: Bolz, Gerhard, 88457 Kirchdorf/Iller (DE); Ansorge, Dieter, 88430 Rot an der Rot (DE); Mang, Florian, 87700 Memmingen (DE)
(74) Vertreter: Laufhütte, Dieter

(57) **Zusammenfassung**

Die Erfindung betrifft eine Arbeitsmaschine mit einer wenigstens eine Scheibe umfassenden Fahrerkabine.

## Beschreibung

Die Erfindung betrifft eine Maschine, insbesondere eine Arbeitsmaschine oder Baumaschine, mit einer wenigstens eine Scheibe umfassenden Fahrerkabine.

Aus dem Stand der Technik sind Arbeitsmaschinen und Baumaschinen bekannt, die einen direkt auf der Maschine angeordneten Fahrerarbeitsplatz aufweisen. Innerhalb desFahrerarbeitsplatzes ist dabei üblicherweise ein Fahrerstand vorgesehen, in dem ein Fahrer bzw. eine Bedienperson Platz nehmen kann und die Bedienung bzw. Steuerung der Maschine übernehmen kann.

Bei bekannten Maschinen erfolgt die Bedienung einer Arbeitsausrüstung der Maschine und auch einer Drehbewegung oder einer sonstigen Bewegungen der Maschine bei konventioneller Bauweise über Handsteuergeräte, die durch hydraulische und/oder elektrische Signale Steuerventile betätigen, um einen Ölstrom zu entsprechenden Hydraulikzylindern zu leiten.

Dabei wird in Abhängigkeit von dem Weg bzw. der Auslenkung an den Handsteuergeräten eine entsprechende Ölmenge an einen jeweiligen Hydraulikzylinder geleitet.

Die Steuerbewegungen der Handsteuergeräte werden üblicherweise von einer Bedienperson durchgeführt, die im Regelfall auf bzw. in der Maschine sitzt.

Aus dem Stand der Technik ist es ferner bekannt, die Funktionen konventioneller Bedienungen bzw. die Bedienung der Maschine wenigstens teilweise auf eine externe Bedieneinheit zu übertragen. Eine Bedienperson kann so neben der Maschine stehen und/oder von dieser beabstandet sein und die Maschine über eine Remote-Steuerung bzw. über eine Fernsteuerung steuern.

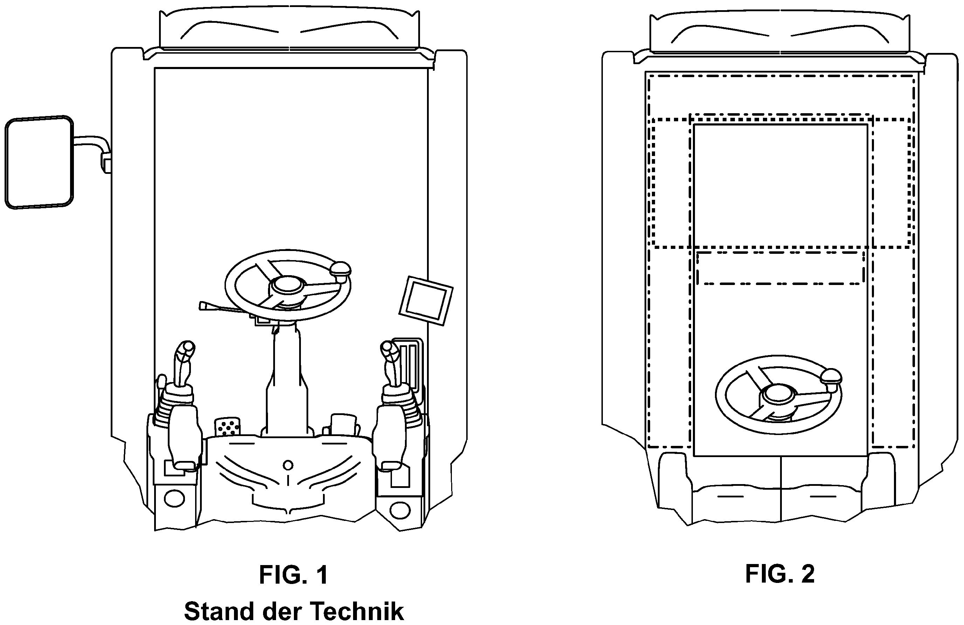

Ein entsprechender Arbeitsplatz ist in der Figur 1 gezeigt. Im rechten vorderen Bereich des Fahrerarbeitsplatzes ist dabei ein Display angeordnet, mittels dem Informationen zum Betrieb der Maschine visualisiert werden können.
Außerdem werden unterschiedliche Einstellungen und Bedienungen über das Display vorgenommen. Hierbei kann die Bedienung direkt über das Display (Touchdisplay) oder über unterschiedlich ausgeführte Navigationselemente erfolgen.

Das Display kann auch für 2D- und 3D-Grabkontrollsysteme genutzt werden, welche dem Fahrer beispielsweise eines Baggers die abzutragende Raumrichtung anzeigen können. Dabei kann der Fahrer bzw. die Bedienperson beispielsweise nach Pfeilanzeigen arbeiten.
Allerdings können aufgrund der beengten Platzverhältnisse im Fahrerarbeitsplatz beispielsweise einer Baumaschine keine beliebig großen Displays verwendet werden. Durch die steigende Anzahl an visuell darzustellenden Informationen wie beispielsweise Geräteüberwachungen, Grabsystemen, Begrenzungen, Automatisierungen, kann die vorhandene Anzeigefläche eines Displays nicht ausreichen.

Im Durchschnitt sind in bekannten Baumaschinen Anzeigeeinheiten mit einer Größe von etwa 7 Zoll verbaut. Deren Anordnung erfolgt in den meisten Fällen um die rechte A-Säule, wie in Figur 1 gezeigt. Die Anordnung erfolgt sowohl im Querformat als auch im Hochformat. Warnungen sowie Überwachungen wie z.B. des Rückraums oder des Seitenraums müssen auf dieser Fläche dargestellt werden und sind deshalb klein. Alternativ müssen die Informationen über zusätzliche Einrichtungen wie z.B. Lautsprecher bzw. akustische Warntöne ausgegeben werden. Durch diese zusätzlich nötigen Ausgabearten wird der Fahrer nachteiligerweise belastet bzw. abgelenkt.
Es müssen beispielsweise einschlägige Normen für die Gestaltung der Anzeige von kameraunterstützten Seiten- und Rückraumeinrichtungen eingehalten werden, was je nach Geräteausstattung die Verwendung mehrerer Displays erfordert.
Vor diesem Hintergrund ist es Aufgabe der Erfindung, eine Maschine bereitzustellen, die eine verbesserte Ausgabe bzw. Visualisierung von Informationen für den Fahrer ermöglicht. Die Visualisierung kann dabei baugeräte-spezifisch bzw. maschinen-spezifisch sein.

Diese Aufgabe wird erfindungsgemäß durch eine Maschine mit den Merkmalen des Anspruchs 1 gelöst. Vorteilhafte Ausgestaltungen sind Gegenstand der Unteransprüche.

Demnach ist eine Maschine, insbesondere eine Arbeitsmaschine oder eine Baumaschine vorgesehen, mit einer wenigstens eine Scheibe umfassenden Fahrerkabine, wobei wenigstens ein Teil der Scheibe als Anzeigefläche einer Anzeigeeinrichtung zum Anzeigen von Informationen ausgebildet ist. Bei der Scheibe kann es sich selbstverständlich um eine Scheibe der Fahrerkabine handeln, durch welche der Fahrer vom Innenraum der Fahrerkabine nach außen blicken kann. Durch die Nutzung der Scheibe oder eines Teils der Scheibe der Fahrerkabine steht eine größere Fläche zur Anzeige von Informationen bereit, als dies gemäß dem Stand der Technik der Fall ist. Wenn vorliegend auf eine Arbeitsmaschine Bezug genommen wird, so kann damit stets auch eine Baumaschine gemeint sein.

In einer bevorzugten Ausführung der Erfindung ist denkbar, dass die Scheibe eine Seitenscheibe und/oder eine Frontscheibe der Fahrerkabine ist, und/oder dass die Scheibe in zwei insbesondere horizontal trennbare und/oder verschwenkbare Teilscheiben unterteilt ist. Durch die Unterteilbarkeit der Scheibe kann insbesondere eine Frontscheibe aber auch eine Seitenscheibe je nach den Bedürfnissen des Fahrers verschwenkt bzw. geteilt werden, und so ein teiloffener Betrieb der Maschine ermöglicht werden. Es kann auch vorgesehen sein, dass mehr als eine Scheibe der Fahrerkabine als Anzeigefläche der Anzeigeeinrichtung genutzt wird. Denkbar ist beispielsweise, dass die Frontscheibe und wenigstens eine Seitenscheibe der Fahrerkabine als Anzeigefläche ausgebildet ist.

In einer besonders bevorzugten Ausführung der Erfindung ist denkbar, dass die obere der Teilscheiben unter das Kabinendach verschiebbar und/oder schwenkbar und/oder unter dem Kabinendach verstaubar und/oder feststellbar ist. Hierdurch kann der verschwenkte Teil der Scheibe unter dem Kabinendach geschützt werden und behindert dabei den Fahrer nicht beim Ausführen von Arbeiten innerhalb der Fahrerkabine.. Dabei spielt die Art der Betätigung bzw. der Einfluss einer kraftunterstützten Öffnung keine Rolle.

In einer weiteren bevorzugten Ausführung ist denkbar, dass die untere der Teilscheiben nach oben verschiebbar und/oder verschwenkbar ist, wobei die untere Teilscheibe insbesondere im oberen Drittel des Scheibenbereichs anordenbar ist.

In einer Ausführung in der die untere Teilscheibe als Anzeigefläche der Anzeigeeinrichtung ausgebildet ist und beispielsweise transparente oder teiltransparente Display-Abschnitte aufweist, kann entsprechend eine Anzeigemöglichkeit durch Nutzung der unteren Teilscheibe bestehen. Dabei kann die Fahrerkabine in einem teilgeöffneten Zustand vorliegen, in welchem die obere Teilscheibe beispielsweise unter das Kabinendach geschwenkt ist und für den Fahrer nicht ohne Weiteres einsehbar ist.

In einer weiteren bevorzugten Ausführung ist denkbar, dass die Scheibe eine gleichbleibende Rasterung umfasst, bei der ähnliche Informationen an gleichen Stellen der Scheibe verortet sind. Hierdurch wird die Nutzung der Maschine vereinfacht, da der Fahrer besser auf die fest zugeordneten Informationen zugreifen kann.

In einer weiteren bevorzugten Ausführung ist denkbar, dass Warninformationen in einem mittleren Bereich der Scheibe anzeigbar sind. Dadurch sind diese besonders einfach und schnell vom Fahrer erfassbar, sodass Gefahrsituationen besonders schnell erkannt werden können.

In einer weiteren bevorzugten Ausführung ist denkbar, dass die Anzeigefläche dazu eingerichtet ist, in Abhängigkeit von der Position einer Bedienperson Informationen spiegelbildlich anzuzeigen. Die Maschine kann dabei eine Einrichtung umfassen, mittels der erfasst werden kann, ob sich eine Bedienperson bzw. ein Fahrer innerhalb oder außerhalb der Fahrerkabine und/oder in welcher Entfernung sich die Bedienperson von der Scheibe befindet. Wenn die Einrichtung erkennt, dass eine Bedienperson außerhalb der Fahrerkabine befindlich ist und beispielsweise die Maschine von außerhalb steuert, so können spiegelverkehrte Informationen auf der Scheibe angezeigt werden, die dementsprechend von außen nicht spiegelverkehrt und damit einfach erkennbar für die Bedienperson sind.

In einer weiteren bevorzugten Ausführung ist denkbar, dass die Anzeigeeinrichtung dazu eingerichtet ist, in Abhängigkeit von der Position einer Bedienperson die Größe der angezeigten Informationen zu variieren. Mittels einer oben genannten Einrichtung zur Erfassung der Entfernung der Bedienperson kann die entsprechende Größenanpassung bewirkt oder veranlasst werden.

In einer weiteren bevorzugten Ausführung ist denkbar, dass die Maschine eine Eye-Tracking-Einrichtung zum Verfolgen der Blickrichtung der Bedienpersonen umfasst. Durch eine Eye-Tracking-Einrichtung wird eine dynamische Anzeige im direkten Gesichtsfeld des Fahrers ermöglicht, sodass einfacher sichergestellt werden kann, dass für den Fahrer wichtige Informationen tatsächlich von ihm einsehbar sind. Die Eye-Tracking-Einrichtung kann dabei mit der Anzeigeeinrichtung und einer Regelung/Steuerung bzw. mit einem Bordcomputer der Arbeitsmaschine gekoppelt sein und entsprechend zur Anpassung der angezeigten Informationen genutzt werden.

Für die korrekte Darstellung einer Kontur, eines Grabvolumen, verbauter Leitungen, etc. ist es nötig, den genauen Standort des Geräts zu kennen und die Planungsdaten zur Verfügung zu haben.

In einer weiteren bevorzugten Ausführung kann ferner vorgesehen sein, dass die Maschine einen Projektor zum Projizieren von Informationen auf den Untergrund der Maschine umfasst. Der Begriff des Untergrunds ist vorliegend nicht einschränkend zu verstehen und kann jegliche im Bereich der Maschine vorhandenen Strukturen umfassen. Mittels des Projektors wie beispielsweise eines Laserprojektors können Informationen auf den Untergrund der Maschine projiziert werden, welche ebenfalls von dem Fahrer der Maschine einsehbar sind. Der Projektor kann dabei wie die Eye-Tracking-Einrichtung mit der Regelung/Steuerung bzw. mit dem Bordcomputer gekoppelt sein und so entsprechend angesteuert werden. Die Voraussetzungen hierfür sind die gleichen wie die oben genannten.

Weitere Einzelheiten und Vorteile der Maschine sind anhand der in den Figuren beispielhaft gezeigten Ausführungen erläutert. Dabei zeigen:
- Figur 1:: eine Fahrerkabine gemäß dem Stand der Technik;
- Figur 2:: eine Fahrerkabine einer erfindungsgemäßen Arbeitsmaschine;
- Figur 3:: eine schematische Darstellung gespiegelter Anzeigen an einer erfindungsgemäßen Arbeitsmaschine;
- Figur 4:: veränderte optische Bedingungen bei unterschiedlichen Fahrern;
- Figur 5:: veränderte optische Bedingungen bei unterschiedlichen Fahrern mit unterschiedlichen Darstellungen von Informationen auf einer Frontscheibe;
- Figur 6:: den Aufbau der Scheibe einer erfindungsgemäßen Arbeitsmaschine bei geschlossener Fahrerkabine; und
- Figur 7:: den Aufbau der Scheibe einer erfindungsgemäßen Arbeitsmaschine im offenen Zustand der Fahrerkabine.

Die Erfindung betrifft die Baugeräte-spezifische Visualisierung von Informationen beispielsweise auf der Frontscheibe einer Fahrerkabine einer Arbeitsmaschine. Die erfindungsgemäße Arbeitsmaschine kann sich besonders durch dynamische Visualisierungen, eine gerasterte Anzeige, automatischer Anzeigeumschaltungen und/oder fahrerspezifische Ausrichtungen auszeichnen. Die Erfindung implementiert Display-Technologien in die als Anzeigefläche ausgebildete Scheibe einer Arbeitsmaschine. Dabei kann die Anzeigefläche eine dauerhaft vorhandene Visualisierungsfläche sein.

In gattungsgemäßen Arbeitsgeräten werden zweiteilige Frontscheibenelemente eingebaut, welche durch den Fahrer komplett geöffnet werden können. Diese Möglichkeit wird durch die Scheibe bzw. Frontscheibe als Visualisierungsoberfläche eingeschränkt. Eine technische Lösung kann hierbei im einfachsten Fall eine einteilige Festverglasung sein.

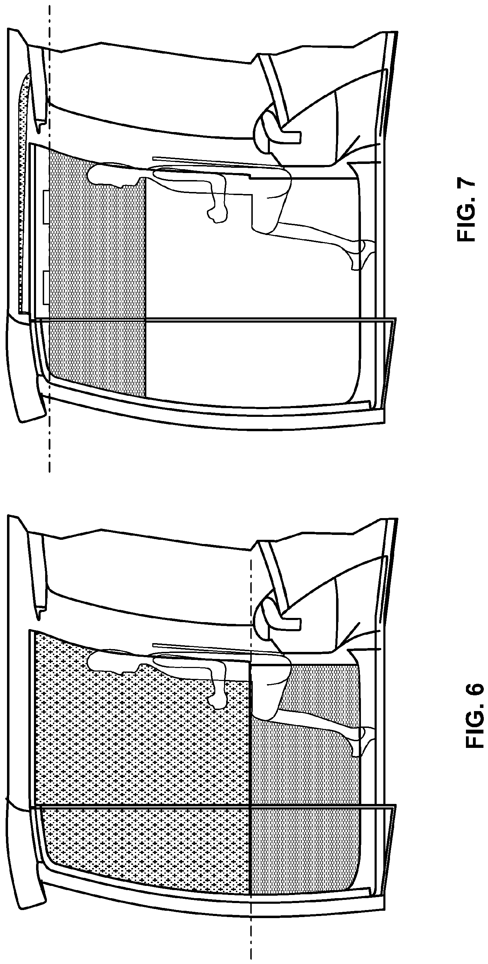

Als technische Neuerung wird in den Figuren 6 und 7 ein insbesondere öffenbares Scheibensystem beschrieben, bei dem ein unteres Scheibenelement drehbar am oberen Scheibenelement vorgesehen ist. Durch das Öffnen des Scheibensystems wird die obere Scheibe unter dem Kabinenhimmel verstaut, während die untere Scheibe im oberen Drittel des Scheibenbereichs verbleibt und als reduzierte Anzeigefläche dient. Bei der Scheibe kann es sich um eine Frontscheibe der Fahrerkabine und alternativ oder zusätzlich um eine Seiten- oder Heckscheibe handeln.

Die Erfindung ermöglicht die Visualisierung von Informationen, sowie die dynamische Visualisierung geräte- und auftragsbezogener Charakteristika direkt auf der Frontscheibe und/oder einer sonstigen Scheibe der Arbeitsmaschine. Bei der Arbeitsmaschine kann es sich um eine selbstfahrende Arbeitsmaschine oder um eine Baumaschine handeln.

Die Größe und der Inhalt dieser Anzeigefläche auf der Frontscheibe sind im Vergleich zu den bekannten Anzeigeeinrichtungen deutlich größer und komplexer. Die Anzeige kann beispielsweise in einem Hydraulikbagger auf einer Fläche von circa 850 mm x 1500 mm erfolgen. Ein aktuell gängiges 7"-Display besitzt dagegen eine Anzeigefläche von etwa 92 mm x 155 mm. Die Verwendung der neuen Anzeigeart bedeutet eine Steigerung der Anzeigefläche um etwa das 90-fache. Es können dynamische Anzeigen vorgesehen sein, welche auftrags- und/oder gerätebezogene Informationen visualisieren. Hierbei können beispielsweise Aushubkonturen mit verbauten Rohr- oder Elektroleitungen direkt auf der Frontscheibe dargestellt werden und über das Echtzeitbild gelegt werden.

Für eine verbesserte Intuitivität der Anzeige kann auf eine gleichbleibende Rasterung zurückgegriffen werden, welche die Scheibenfläche in unterschiedliche Bereiche bzw. Rasterbereiche mit einer jeweiligen Aufgabe bzw. mit einem jeweiligen Informationstyp aufteilt.

Hierbei können Bereiche für Grundinformationen, Warnungen, Anzeigen aktueller Einstellungen, Felder für dynamische Informations- und für Geräteumfeldüberwachungen vorgesehen sein. Durch die immer gleiche Stelle der Anzeigen tritt ein Lernerfolg auf und der Fahrer kann allein durch ein aufpoppendes Symbol bzw. durch das Erscheinen einer Information in einem bestimmten Bereich der Scheibe die Art der Information sofort zuordnen.

Je nach Priorisierung der Wichtigkeit der Anzeigen kann es zu zeitlich begrenzten Überdeckungen von Anzeigen kommen. Beispielsweise kann eine Warnung immer im Vordergrund dargestellt werden. Allgemein können sicherheitskritische Informationen am höchsten priorisiert werden. Eine dynamische Anzeige einer Aushubkontur kann dabei überdeckt werden. Außerdem kann eine Warnung mittig auf der Fläche angezeigt werden.

Je nach Bedieneraktion kann aber diese Rasterung und die Anzeige der priorisierten Informationen unterschiedlich sein. Zur Verdeutlichung wird hier das Beispiel von im Schwenkbereich befindlichen Personen herangezogen. Je nach Schwenkrichtung wird der Fahrer unterschiedliche Haupt-Blickrichtungen einnehmen. Daraus kann für die Anzeige von Warnungen bei einem Schwenkvorgang nach links die Anzeige von Warnungen auf der linken Scheibe am sinnvollsten sein.

Allgemeine Informationen, wie die Drehzahl, Gangwahl, Informationen zum Anbauwerkzeug, Uhrzeit und Temperaturen können dagegen im Randbereich der Scheibe dargestellt werden. Die Rasterung der Frontscheibe sowie die Priorisierung der Informationen können Figur 2 entnommen werden.

In einer bevorzugten Ausführung der Erfindung kann die Anzeige in Abhängigkeit von der Position des Bedieners verändert werden. Je nachdem, ob der Bediener die Arbeitsmaschine standardmäßig von innen oder ferngesteuert von außen bedient, kann die Visualisierung gespiegelt dargestellt werden.

Dadurch wird eine Möglichkeit der Kommunikation zwischen Gerät und Bediener verwirklicht, welche für einen gesamtheitlich ferngesteuerten Arbeitsbetrieb unverzichtbar ist. Auch diese Anzeige kann in Raster aufgeteilt sein und der gleichen Priorisierung folgen, wie sie oben beschrieben ist.

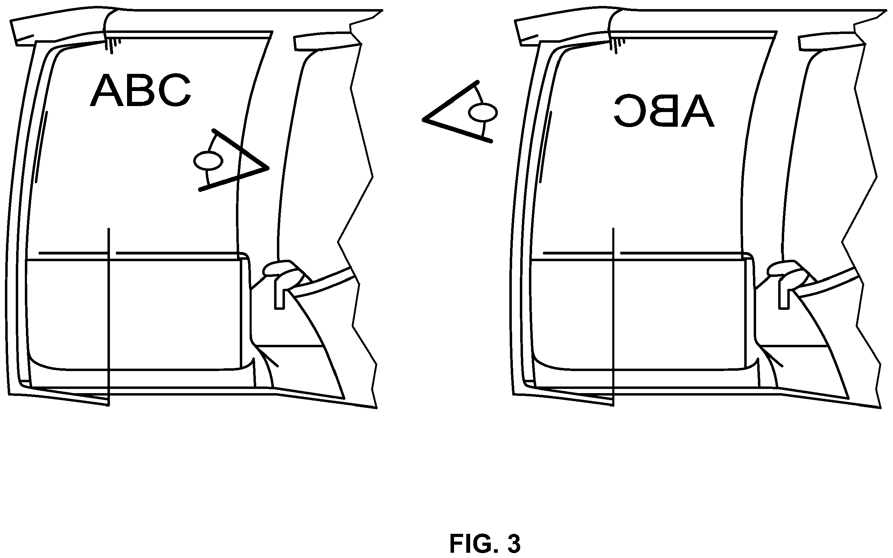

Die Anpassung der Anzeigegröße kann in Abhängigkeit von der Entfernung des Bedieners automatisch erfolgen. Durch diesen Schritt wird die gute Ablesbarkeit der Informationen sichergestellt. Eine schematische Darstellung der Anzeige in Abhängigkeit von der Position des Fahrers kann der Figur 3 entnommen werden. Für die Darstellung von Informationen im ferngesteuerten Betriebszustand bieten sich neben der Frontscheibe auch die Seitenscheiben der Fahrerkabine an.

Die Arbeitsmaschine kann auch eine Eye-Tracking-Einrichtung umfassen. Durch das Eye-Tracking in Verbindung mit 3D-GPS-Daten und -Systemen kann rechnerisch die genaue Lage und Größe eines zentral geplanten Auftrags im direkten Sichtfeld dargestellt werden. Je nach Geräteausrichtung kann hierbei eine dynamische Darstellung und Überwachung der Aufgabe erfolgen. Hierdurch kann die Effizienz der Aufgabenabarbeitung gesteigert werden und die Fehlerwahrscheinlichkeit reduziert werden. Durch diese Funktionalität werden Vermessungsaufwände reduziert oder komplett vermieden.

Alternativ oder zusätzlich zur dynamischen Anzeige ist ein fest integrierter Projektor wie beispielsweise ein Laserprojekt am Gerät denkbar. Dieser Projektor kann ebenfalls über GPS-Signale und/oder 3D-GPS-Daten eine dynamische Anzeige direkt auf dem Boden errechnen und projizieren.

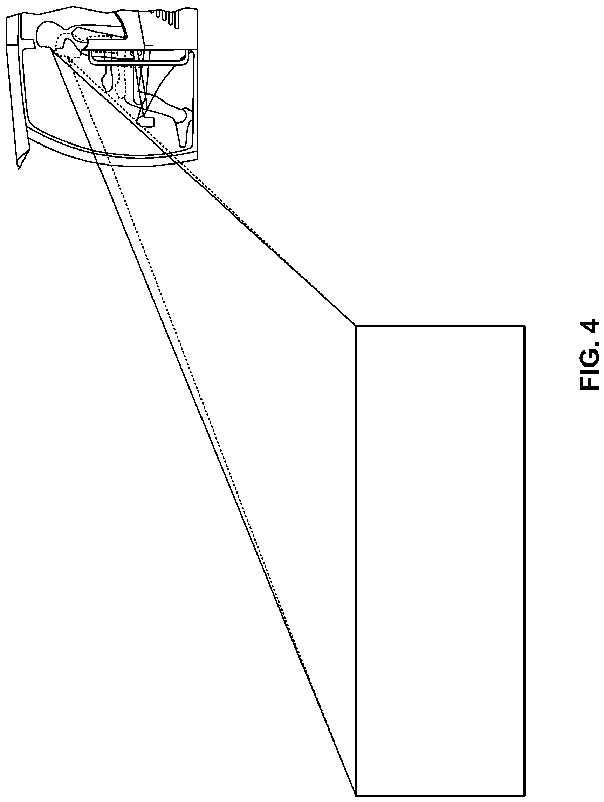

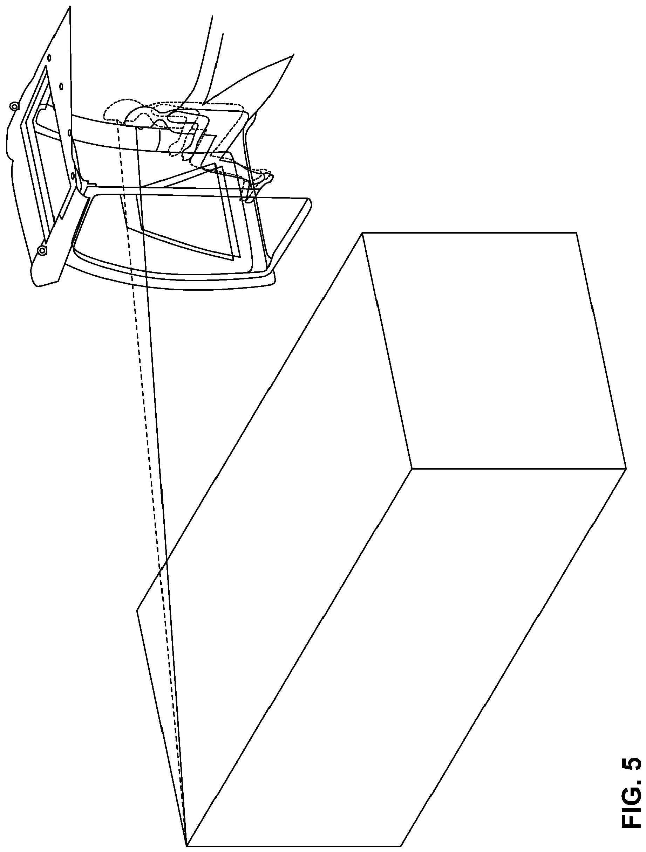

Eine überlagerte Darstellung von Rohr- und/oder Elektroleitungen bietet sich als mehrfarbige Überlagerung im direkten Sichtfeld des Fahrers auf der Scheibe an. Eine schematische Darstellung der Anzeige auf der Frontscheibe in Abhängigkeit zur sich ändernden Augpunktlage kann den Figuren 4 und 5 entnommen werden. Dargestellt sind ein angenommenes einfaches Grabvolumen und die daraus resultierende Darstellung auf der Frontscheibe.

Die Arbeitsmaschine kann eine Scheibe mit einem zweiteiligen Aufbau umfassen, welche die Möglichkeit des Öffnens mit der Anforderung an eine möglichst große Visualisierungsfläche auf der Frontscheibe verbindet. Der schematische Aufbau der Neuheit ist in den Figuren 6 und 7 zu erkennen. Dabei kann eine drehbare Scharnier-Verbindung zwischen der oberen und unteren Frontscheibe vorgesehen sein. Durch das Öffnen des Frontscheibensystems kann das obere Frontscheibenelement unter dem Dachhimmel verstaut werden. Das untere Frontscheibenelement kann im gleichen Zug ins obere Drittel des Frontbereichs verschoben werden. Während die unteren 2/3 der Frontpartie offen sind, verbleibt im oberen Drittel das untere Frontscheibenelement und dient als Visualisierungsfläche. Entsprechendes gilt auch für eine Ausführung, bei der eine Seitenscheibe die Anzeigefläche der Anzeigeeinrichtung ist.

Erfindungsgemäß kann unabhängig von der Display-Technologie eine transparente Displaylösung verwendet werden. Vorteile liegen vor allem in der sehr großen Anzeigefläche und der Informationsvisualisierung im direkten Sichtfeld des Fahrers.

Des Weiteren könnnen visuelle Anzeigeeinheiten verwendet werden, welche den Fahrer unterbewusst auf eine Gefahr hinweisen.

Durch die direkte Anzeige im Sichtfeld nimmt der Fahrer Warnungen und Informationen besser wahr. Die direkte Anzeige auf einer Scheibe birgt außerdem Potentiale in einer Teilautomatisierung oder beispielsweise einem 3D-GPS unterstützten Grabvorgang. Die Aufmerksamkeit des Fahrers bleibt erfindungsgemäß immer im primären Sichtfeld.

Der erfindungsgemäße Ansatz verfolgt primär das Ziel, dem Fahrer eine Vielzahl an Informationen einfach darzustellen, ohne ihn zusätzlich zur eigentlichen Arbeit zu belasten.

Um eine bessere Gerätezuordnen zu erreichen können schematische Geräteübersichten verwendet werden.

Gemäß dem Stand der Technik wird beispielsweise eine Service-Aufgabe auf dem kleinen Display als rot aufleuchtendes Symbol dargestellt. Um die eigentliche Serviceaufgabe zu erfahren muss ein entsprechendes Untermenü aufgerufen werden und der Text gelesen werden.

Mit der erfindungsgemäß möglichen Anzeige direkt im Sichtfeld wird der Fahrer schnell und präzise auf eine anstehende Wartung hingewiesen.

Für zukünftige Arbeitsmaschinen werden 3D-unterstützte Aufträge bzw. Arbeitsvorgänge wahrscheinlich einen wichtigen Stellenwert einnehmen. Diese Entwicklung verlangt andere Arten an visuellen Darstellungen.

Demnach können bei einem Arbeitsauftrag wie beispielsweise einem Aushub Bemaßungen sowie im Boden befindliche Störkonturen wie Rohrleitungen oder Elektroleitungen angezeigt werden. Ein kleines Symbol auf der Anzeige kann auf das empfohlene Anbauwerkzeug hinweisen.
Durch eine vorhandene Anbauwerkzeug-Datenbank kann über die abzuarbeitende Aufgabe und Kenntnisse über die Beschaffenheit des Untergrunds, dem Fahrer eine Werkzeugempfehlung ausgegeben werden. Hierdurch kann eine Effizienzsteigerung erreicht werden.

Erfindungsgemäß kann für den beispielhaften Aushub eine Echtzeitvisualisierung dargestellt werden. Es können die Außenkonturen des Aushubs visualisiert werden, sowie im Boden befindliche Rohrleitungen dargestellt werden.

Zur Orientierung kann die aktuelle Grabtiefe angezeigt und am gleichen Maßstab die kritische Tiefe als Warnung dargestellt werden.

Erfindungsgemäß können auch im Geräteumfeld bzw. im Umfeld der Arbeitsmaschine befindliche Personen und/oder Gegenstände erkannt und/oder angezeigt werden.

Voraussetzung ist eine Personen- und/oder Gegenstandserkennung, die mit der Anzeigeeinrichtung und/oder beispielsweise mit einem Bordcomputer gekoppelt ist.

Die Positionen einer Person oder eines Gegenstandes können als mitlaufendes Symbol auf der Scheibe dargestellt werden. Außerdem kann durch eine entsprechende Fahrerarbeitsplatz-Innenbeleuchtung auf den Abstand zur Person hingewiesen werden. Dabei kann die Intensität der Beleuchtung in Abhängigkeit von der Entfernung der Arbeitsmaschine Entfernung zur Person und/oder zum Gegenstand gesteigert oder verringert werden.

Als weitere Steigerung der Gerätesicherheit ist zusätzlich zur Anzeige eine automatische Drehwerksbegrenzung denkbar.

Ferner kann die Arbeitsmaschine mit einer Drohne gekoppelt sein. Zur Schaffung einer verbesserten Übersicht über die Arbeitsmaschine und/oder über die gesamte Baustelle/Umschlagaufgabe kann die Verwendung einer Drohne sinnvoll sein. Die Drohne kann im Arbeitseinsatz direkt über dem Gerät schweben und eine hochauflösende Echtzeitvisualisierung erzeugen. Diese Visualisierung kann auf der Anzeigefläche ganz oder teilweise angezeigt werden. Je nach Interesse kann der Bereich bzw. der angezeigte Bereich über die Flughöhe der Drohne gesteuert werden.

Außerdem kann beispielsweise eine Drone zur Statusverfolgung einer Aufgabe, beispielsweise durch Ermitteln des Geländeprofils und Abgleich eines Sollstands verwendet werden. Außerdem können parallel erzeugte Bilddateien dem Fahrer überlagert im direkten Sichtfeld präsentiert werden.

## Patentansprüche

1. Arbeitsmaschine mit einer wenigstens eine Scheibe umfassenden Fahrerkabine, **dadurch gekennzeichnet, dass** wenigstens ein Teil der Scheibe als Anzeigefläche einer Anzeigeeinrichtung zum Anzeigen von Informationen ausgebildet ist oder dient.

2. Arbeitsmaschine nach Anspruch 1, **dadurch gekennzeichnet, dass** die Scheibe eine Seitenscheibe und/oder eine Frontscheibe und/oder eine Dachscheibe der Fahrerkabine ist und/oder dass die Scheibe in zwei insbesondere horizontal trennbare und/oder verschwenkbare Teilscheiben unterteilt ist.

3. Arbeitsmaschine nach Anspruch 2, **dadurch gekennzeichnet, dass** die obere der Teilscheiben unter das Kabinendach verschiebbar und/oder schwenkbar und/oder unter dem Kabinendach verstaubar und/oder feststellbar ist.

4. Arbeitsmaschine nach Anspruch 2 oder 3, **dadurch gekennzeichnet, dass** die untere der Teilscheiben nach oben verschiebbar und/oder verschwenkbar ist, wobei die untere Teilscheibe insbesondere im oberen Teilbereich des Scheibenbereichs anordenbar ist.

5. Arbeitsmaschine nach einem der vorhergehenden Ansprüche, **dadurch gekennzeichnet, dass** die Scheibe eine gleichbleibende Rasterung umfasst, bei der ähnliche Informationen an gleichen Stellen der Scheibe verortet sind.

6. Arbeitsmaschine nach einem der vorhergehenden Ansprüche, **dadurch gekennzeichnet , dass** Warninformationen in einem mittleren Bereich der Scheibe anzeigbar sind.

7. Arbeitsmaschine nach einem der vorhergehenden Ansprüche, **dadurch gekennzeichnet, dass** sich Warnungen dynamisch an das jeweilige Fahrersichtfeld anpassen.

8. Arbeitsmaschine nach einem der vorhergehenden Ansprüche, **dadurch gekennzeichnet, dass** sich die Anzeige dynamisch an die jeweiligen Umgebungseinflüsse anpasst.

9. Arbeitsmaschine nach einem der vorhergehenden Ansprüche, **dadurch gekennzeichnet, dass** die Anzeigefläche dazu eingerichtet ist, in Abhängigkeit von der Position einer Bedienperson Informationen spiegelbildlich anzuzeigen.

10. Arbeitsmaschine nach einem der vorhergehenden Ansprüche, **dadurch gekennzeichnet, dass** die Anzeigeeinrichtung dazu geeignet ist, in Abhängigkeit von der Position einer Bedienperson die Darstellung der angezeigten Informationen zu variieren.

11. Arbeitsmaschine nach einem der vorhergehenden Ansprüche, dadurch ge- kennzeichnet, dass die Arbeitsmaschine eine Eye-Tracking-Einrichtung zum Verfolgen der Blickrichtung einer Bedienperson umfasst.

12. Arbeitsmaschine nach einem der vorhergehenden Ansprüche, dadurch ge- kennzeichnet, dass die Maschine einen Projektor zum Projizieren von In- formationen auf die als Projektionsfeld dienende Scheibe der Maschine um- fasst.

13. Arbeitsmaschine nach einem der vorhergehenden Ansprüche, dadurch ge- kennzeichnet, dass ein Bild, beispielsweise ein Kamerabild, als überlagerte Bilddatei über das Fahrersichtfeld gelegt wird
